# EUROPEAN PATENT APPLICATION

(11) **EP 4 050 441 A1**
(43) Date of publication of application: **31.08.2022**
(21) Application number: 21020101.8
(22) Date of filing: 25.02.2021
(51) Int. Cl.: G05B 19/418, G05B 23/02

(54) **METHOD AND SYSTEM FOR MONITORING OPERATION OF A PROCESS PLANT**

(71) Applicant: Linde GmbH, 82049 Pullach (DE)
(72) Inventor: Wellenhofer, Anton, 82069 Hohenschäftlarn (DE); Grosse, Oliver, 01157 Dresden (DE); Wellenhofer, Kathrin, 82069 Hohenschäftlarn (DE); Bosnjak, Ana, 85579 Neubiberg (DE)
(74) Representative: Lu, Jing

(57) **Abstract**

The invention relates to method for monitoring operation of a process plant (100), comprising the following steps: obtaining, from transmission devices (140, 142, 150, 152), current values (V1, V2, V3, V4) of a plurality of parameters (P1, P2, P3; P4) during operation of the plant (100), the parameters comprising a plurality of process parameters (P1, P2), comparing (220) the obtained current values (V1, V2) with a predefined allowable range (T) for the plurality of process parameters, determining, if at least one of the current values (V1, V2) deviates from the allowable range (T), that a trigger criterion (C) is met, and triggering, if at least one trigger criterion is met, an action (A). The invention also relates to a corresponding monitoring system (180) and a process plant (100).

## Description

The present invention relates to a method and a monitoring system for monitoring operation of a process plant.

### Background of the invention

Process plants (also called chemical plants) are usually understood to be plants for carrying out processes, i.e. substance modifications, substance conversions and substance separations with the aid of purposeful physical and/or chemical and/or biological and/or nuclear effects. Such modifications and conversions typically comprise crushing, sieving, mixing, heat transferring, cohobating, crystallizing, drying, cooling, filling, and superimposed substance transformations, such as chemical, biological or nuclear reactions.

A process plant can comprise several different components such as different heat exchangers, e.g. plate-fin heat exchangers (PFHE) or coil-wound heat exchangers (CWHE), columns, e.g. distillation or adsorption/absorption or wash columns, machines like compressors, boosters, turbines, pumps, absorbers, reactors, etc. For example, process plants can be plants for producing specific gases like air separation units, natural gas plants, ethylene plants, hydrogen plants, adsorption plant, etc.

A process plant such as an air separation plant is typically a very complex plant in which many different (process) parameters have to be set and/or controlled Conventionally, attackers can cause single failure events that can be mitigated quite easily. The basic safety philosophy considers one event or one upset (single failure philosophy) as a trigger for one or a series of unwanted effects to be mitigated by plant safety measures, i.e., the plant is monitored by means of process indication (typically, the medium pressure, temperature, flow, properties) and after reaching or exceeding a threshold of one or more of the monitored values one or more actions are executed to force the affected process area back to the desired operation conditions or to execute a local or total shut-down (safe state). Dependent effects (domino effects) might also be taken into consideration. The measures are selected such that one failure is safely mitigated. Examples are a rectification column scenario with loss of cooling in overhead condenser or maximum heat input to reboiler. One scenario at a time is considered and measures are sized to mitigate the scenario in a safe manner. Both scenarios at a time, if not linked to each other, are considered as double jeopardy and are not considered as a threat and thus the mitigation measures are not verified against this scenario.

With regard to the recently increasing likelihood of so-called hacker attacks or cyber-attacks, however, a certain safety problem can arise in process plants that have more and more controlled or regulated processes or components. Due to the fact that virtually all process or petrochemical plants control systems are by direct or indirect means connected to the internet, cyber-attacks, formerly not considered a threat, become real. By taking over a control system, the single failure philosophy is obsolete. Attacking and taking over of a possibly installed ALC (automated load control system), allows parallel and fast access on a set of or all process control relevant input devices like valves, pumps, etc. A mechanical safety device, sized for single failure, typically is not sufficient in size. Also, triggering multiple events simultaneously may lead to overload of existing relief systems to which the mechanical safety relieving devices are connected (pressure safety devices).

It is therefore an object of the present invention to monitoring such process plant in a way to recognize such cyber-attack and, thus, making the process plant or its operation safer.

### Disclosure of the invention

This object is achieved by providing a method for monitoring operation of a process plant, a monitoring system and a process plant with the features of the independent claims. Embodiments of the invention are the subject of the dependent claims and of the description that follows.

The invention relates to a method for monitoring the operation of a process plant. Typical process plant to be monitored are such mentioned above, for example, plants for producing specific gases like air separation units, natural gas plants, ethylene plants, hydrogen plants, adsorption plant, etc. Such method comprises several steps to be performed. One step is obtaining, from transmission devices, current values of a plurality of parameters during operation of the plant. Such transmission devices (or transmission and measuring devices) may be any of programmable and/or accessible devices like electronic sensors or measuring devices, providing data. In general, the transmission devices may be wired or wireless type devices.

The mentioned parameters comprise a plurality of process parameters like pressures, temperatures, flows, various levels or compositions of, e.g., media and/or materials used in the process and the like. The transmission devices for obtaining the values of these process parameters are, typically, transmission devices like sensors used in the process plant for regular control anyway. A further step is comparing these obtained current values with a pre-defined allowable range for the process parameters or its current values. Such allowable range is, preferably, determined or calculated from reference values of the plurality of process parameters. The reference values basically can correspond to current values but, preferably, are obtained, prior to obtaining the current values, in a learning phase with normal operation of the process plant. Both, current values and reference values can relate to parameter values evolving over time. In this way, the allowable range is, in particular, determined or defined by two or more of the process parameters and, preferably, by means of data processing.

In a further step, if at least one of the current values deviates from the pre-defined allowable range (i.e., the current value is above the upper range limit or below the lower range limit), it is determined that a trigger criterion is met. If such trigger criterion is met, an action like providing information about discovering such deviation or a counter measure is triggered. Such pre-defined allowable ranges also can be obtained during a phase of normal operation of the process plant, in a learning phase. Such normal operation, in particular, means that the plant operates without any attack or failure. This can be assured, for example, in an initial phase of the operation of a (new) plant. In such initial phase, expected trends and thresholds that indicated failures or attacks can be defined. The reference values can, for example, include expected temporal fluctuation of at least one of the plurality of process parameters, i.e. values of the parameters changing during specific operating phase or the like.

In this way, the behaviour of the process plant can - preferably continuously - be compared to a known behaviour of the process plant - via the values of the (process) parameters. If any of these values deviates from the pre-defined allowable range (i.e., the known and expected behaviour of the plant), this is at least a hint that anything went wrong during operation, for example, that a cyber-attack occurred. The idea behind is that during a cyber-attack many values of (process) parameters, provided by transmission devices, can be changed or tainted while the single transmission devices appear to provide regular values. The comparison of the overall behaviour with historic, known behaviour, however, allows identifying such attack. Verification of the individual values provided by the transmission devices, however, is not necessary. The values can, for example, in general be considered not trustworthy in this context.

Preferably, the method further comprises determining, from the current values of the plurality of (process) parameters, material (or media) balances within a component (or section) of the process plant and/or between two components (or sections) of the process plant. If at least one of the materials balances deviates from reference balance value by more than a pre-defined threshold (or deviates from a corresponding allowed range), it is determined that a trigger criterion is met. Accordingly, the action is triggered. The materials balances, in particular, are balances of process materials or media between to specific points like input and output of a component of the plant. Typically, a mass flow of input material corresponds to a mass flow of output material. Considering some material being lost during process or the like, there should be reference values for such balances. If, however, there is discovered a great difference between input and output mass flow, for example, this indicates any failure or manipulated data provided from transmission devices.

Advantageously, the parameters further comprise plant parameters, at least one of the transmission devices used for obtaining these plant parameters, in particular, being placed on a surface of a component of the process plant. Such transmission devices are, in particular, non-invasive devices, i.e., they are not in contact with any process medium and there is no need for a specific port in the plant. Such plant parameters are preferably, selected from: a metal wall temperature, inner pressure and pressure increase (preferably measured by strain gauges), density changes (preferably measured by ultrasonic devices) indicating wall thickness changes , and liquid level changes, pump or compressor speed, flow, and vibrations. Such plant parameters are, in contrast to process parameters, not used for controlling the process plant or its operation. Such plant parameters can, thus, be obtained in addition in order to provide additional information indicative of a cyber-attack. Such transmission devices used for obtaining the plant parameters can be wireless transmission devices like used in IOT ("Internet of Things" applications) or in mobile communication or the like. The transmission devices used for obtaining the plant parameters themselves can be selected from: a temperature sensor, a strain gauge, an ultrasonic device, and a vibration measurement device or other devices for measuring, e.g, sonic waves, electrical conductivity. In particular, such devices can be low cost devices being places wherever appropriate at the outside or surface of the plant. Also, such plant parameters do not need to be process parameter but can include, as described, any other available parameters or values.

The use of information gathered from outside of the process itself, e.g. on the surface of the equipment or components, is considered sufficient for discovering a cyber-attack, as only loss of containment (LOC), the failure of pressure holding parts and subsequent release of the inventory or any process media to the environment is finally to be prevented. For example, local metal wall temperatures can be obtained, strain gauge on equipment and piping indicate the inner pressure and/or increasing pressure, local ultrasonic devices measure density changes (wall thickness loss, liquid level change), and vibration measurement devices (indirect measure of pumps or compressor speed, indirect flow measurement, frequency measurement to measure operation in unwanted frequency areas, e.g. operating at the Eigenfrequency) also provide further information. Such transmission devices like IOT sensors, delivering information, may be jammed. However, this is an indication on unwanted activities. The sensors themselves typically require to use a cryptographic protocol, to be equipped with means to prevent firmware manipulations after deployment (processor fuse to be melt after initial programming or the like), and to be produced with an immutable UID (unique identifier). Although, data accuracy, quantity, availability and speed may be low (and a delay is long as IOT protocols are designed for low power consumption) this allows long device sleeping periods and triggered actions

As mentioned above, the action to be triggered can comprises providing information about the deviation of the at least one value. This allows staff to identify a cyber-attack. However, such action may also comprise shutting down at least a part of the plant (a unit one or more sections or the entire plant), what, in particular, comprises: bringing at least one safety means into safety position and/or stopping provision of electrical power to at least a part of the plant. For example, control and shut-off valves can be brought into the safe position by a solenoid which is cutting the instrument air, opening the electrical breaker to pumps or heaters will stop the connected equipment to operate due to cut off of the electric power. At first, a single unit can be shut down and then, one or more sections of the entire plant - or also the entire plant - can be shut down.

For this purpose, also so-called SIS (where SIS stands for "Safety Integrated Systems") can be used, with which damage to the process plant or parts thereof can be avoided. Such an SIS system usually has a sensor, logic and an executing element or an actuator. If an error or a malfunction is detected by means of the sensor, the executing element is controlled via the logic to bring the system or a part of it into a safe state.

As mentioned above, the method provided allows monitoring of the plant and discover cyber-attacks, in contrast to conventional single failure mitigation system. However, it is of particular advantage, if the proposed monitoring method is used in addition to a (standard) protection layer for the plant like the single failure mitigation. In this way, the monitoring method provides an addition layer of protection for the plant.

The invention also relates to a monitoring system for monitoring operation of a process plant. Such monitoring system is configured to perform the steps of the method described above. In particular, such monitoring system comprises a control or processing unit like a computer. Also, the (additional) transmission devices can be considered part of such monitoring system. The invention also relates to a process plant comprising such monitoring system. Such plant can be any type of processing plant, a chemical plant, an air separation plant, a natural gas plants, an ethylene plant, a hydrogen plant, or an adsorption plant.

With respect to further embodiments and advantaged of the monitoring system and the process plant, it is referred to the remarks with respect to the method, which apply correspondingly.

### Short description of the figures

- Fig. 1: illustrates a process plant with a monitoring system according to the invention in a preferred embodiment.
- Fig. 2: shows a flow diagram, illustrating a method according to the invention in a preferred embodiment.

### Detailed description of the figures

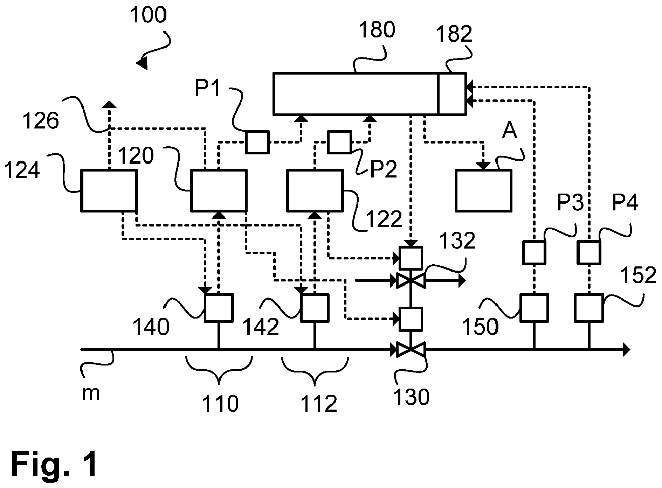

In Fig. 1, a process plant 100 as it can be used within the present invention is illustrated. The process plant 100 can be any of an air separation plant or unit, a natural gas plant, an ethylene plants, a hydrogen plants, an adsorption plant or another one. As mentioned above, the specific type of plant is not of particular relevance for the present invention. By means of example, the flow of a medium m is illustrated, the medium passing two components or sections 110, 112 of the process plant 100.

Further, the process plant 100 is provided with a process control system 120, a safety system 122 (it can be a SIS system as mentioned above) and a maintenance system 124. By means of example, the process control system 120 and the maintenance system 124 are provided with an internet connection 126. Also, the security system 122 might be provided with such internet connection, if required.

Further, transmission devices 140, 142 like sensors are provided at the plant 100, used to measure values of process parameters like pressure, temperature, flow, and composition of the process media m. Thus, the transmission devices 140, 142 can be temperature sensors, flow sensors and the like. By means of example, only two of such transmission devices are shown. These transmission devices 140, 142 provide current values of the process parameters to the process control system 120 and/or to the safety system 122. Thus, the process control system 120 is configured to control an overall operation of the plant 100 based on these current values (note that any further actuators for process control and the like are not shown). The maintenance system 124 might be used, if required, to monitor and/or adapt and/or configure the transmission devices 140, 142.

The safety system 122 is configured to trigger an actuator unit 132 like a solenoid valve. This actuator unit 132, when triggered, closes a further value 130 which is during normal operation in an open state, e.g., in that it is controlled by the process control system 120. For example, actuator unit 132, when triggered, can cause instrument air supplied to the valve 130 being stopped. Thus, valve 130 can take a safety state in order to prevent any further failure during operation of the plant 100. In a conventional process plant, the safety system 122 can trigger such safety state upon a single failure like erroneous opening of a valve or the like.

As mentioned above, during a cyber-attack, values or data provided by the transmission devices 140, 142, for example, may be changed or tainted in a way the process control system 120 and/or the safety system 122 do not detect process deviations and will not counteract. Such cyber-attack, thus, could mirror or pretend a desired plant status while the plant, in fact, is running out of control and leading, finally, in worst case to the total loss of the attacked plant or unit without indication of a mal-operation.

Within the present invention, a monitoring system 180 is provided for the process plant 100 in order to monitor operation of the process plant 100 and to trigger an action like a process plant shut down in case of a cyber-attack or any other attack. The monitoring system 180 is configured to obtain, from the transmission devices 140, 142 (there might be further transmission devices, of course), current values of the process parameters mentioned before. These process parameters are denoted P1 and P2, by means of example. These values can be obtained, by the monitoring system 180, from the transmission devices 140, 142 directly (via a direct communication link) or indirectly via the process control system 120 and/or the safety system 122. Typically, the latter way is easier since the process control system 120, for example, acquires these values of the process parameters P1, P2 anyway for control purposes. Thus, only a data communication from the monitoring system 180 to the process control system 120, for example, is required.

In addition, further transmission devices, in particular wireless transmission devices, denoted 150, 152 by means of example, are provided. These further transmission devices 150, 152 might be any of temperature sensors, strain gauges, ultrasonic devices, and vibration measurement devices. As mentioned above, these devices can be IOT or mobile communication devices providing specific cryptographic protocols for communication and the like. These further transmission devices may be arranged, for example, at the surface of different components of the process plant 100 and be used to measure parameters like metal wall temperature, inner pressure, pressure increase, density change, wall thickness loss, liquid level increase, pump or compressor speed, flow, and change of vibration level. These parameters are called plant parameters - in contrast to the process parameters mentioned before. These plant parameters, denoted P3, P4 by means of example, are typically not used for conventional operation of the process plant.

The monitoring system 180 is further configured to receive or obtain current values also of these plant parameters P3, P4. In case wireless transmission devices 150, 152 are used, the monitoring system 180 might be provided with a wireless receiving hub 182 or similar. Further, the monitoring system 180 is configured to trigger an action A like shutting down the process plant 100 or part of it by, for example, stopping supply of electrical power. Also, monitoring system 180 can be configured to trigger the safety state of valve 130 via actuator unit 132 as described for the safety system 122 above (note that this might be performed directly or may also include triggering the safety system 122 correspondingly).

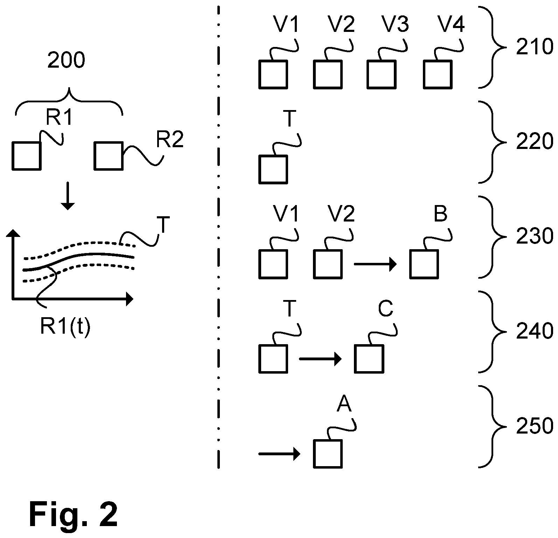

In Fig. 2 a flow diagram, illustrating a method according to the invention in a preferred embodiment is shown. The method can, in particular, be performed by means of the monitoring system 180 shown in Fig. 1 and described above.

During a phase of normal operation - in a learning phase - of the process plant 100, in particular, prior to starting monitoring the operation, a step 200 is performed in which reference values R1, R2 of the process parameters P1, P2 (see Fig. 1) are obtained or acquired overtime. By means of example, such temporal course R1 (t) for process parameter P1 is illustrated. Such courses, including the temporal fluctuations, are then used to define an allowable or allowed range T for the corresponding process parameters P1, P2. This allowable range T is defined for these reference values which defines deviations from the reference values which are considered allowable during operation of the process plant. The range or thresholds may also be derived from more than one input and optional in a form of data processing. There might be an individual range for each process parameter. These range or ranges can be provided in the form of a map of characteristic curves or the like. Depending on the requirements, such range or thresholds define a specific window for the values of the process parameters, irrespective of the specific operation phase of the plant. Also, the range may follow the temporal fluctuation, e.g., for different phases of operation.

After such initial step, monitoring of the operation of the process plant 100 is started. This includes, in step 210, obtaining or acquiring current values V1, V2, V3, V4 of the process parameters P1, P2 and of the plant parameters P3, P4 as mentioned above. The current values V1, V2 of the process parameters are, in step 220, compared with the pre-defined range T, which is obtained earlier in step 200. Note that the current values basically correspond to the reference value, however, during real operation and not during learning phase. Further, in a step 230, these current values V1, V2 can be used to determine or calculate balances B of media or materials used in the process plant. For example, this can include comparing the mass of the material output in component or section 110 of the plant and the mass of the material input in component or section 112 of the plant. Also, current values V3, V4 can be used for determining such balances B.

Further, in step 240, it is determined, whether any of the current values deviates from the respective range T. If this is the case, it is determined that a trigger criterion C is met. This can also be performed for the materials balances B. If, for example, there is an implausible deviation in a balance, it can be determined that a trigger criterion C is met. Also, if, for example, the values V3, V4 failed to be received, this is an indication of manipulation and it can be determined that a trigger criterion C is met.

These steps, typically, are performed continuously during the operation. If at least once it is determined that a trigger criterion C is met, an action A is triggered in step 250. This can include, partial or full shut down of the process plant 100 in order to prevent any further failure.

## Claims

1. A method for monitoring operation of a process plant (100), comprising the following steps:
obtaining (210), from transmission devices (140, 142, 150, 152), current values (V1, V2, V3, V4) of a plurality of parameters (P1, P2, P3; P4) during operation of the plant (100), the parameters comprising a plurality of process parameters (P1, P2),
comparing (220) the obtained current values (V1, V2) with a pre-defined, allowable range (T) for the plurality of process parameters,
determining (240), if at least one of the current values (V1, V2) deviates from the pre-defined, allowable range (T), that a trigger criterion (C) is met, and
triggering (250), if at least one trigger criterion (C) is met, an action (A).

2. The method of claim 1, wherein the pre-defined, allowable range is determined from at least two reference values (R1, R1) of the plurality of parameters.

3. The method of claim 2, wherein the reference values (R1, R1) of the plurality of parameters include expected temporal fluctuation (V1(t)) of at least one of the plurality of process parameters.

4. The method of any one of the preceding claims, further comprising: determining, the pre-defined, allowable range (T), prior to obtaining the current values, in a learning phase with normal operation of the process plant (100).

5. The method of any one of the preceding claims, further comprising: determining (230), from the current values of the plurality of parameters, materials balances (B) within a component of the process plant and/or between two components (110, 112) of the process plant, and determining, if at least one of the material balances (B) deviates from reference balance value by more than a pre-defined threshold, that a trigger criterion is met.

6. The method of any one of the preceding claims, the parameters further comprising plant parameters (P3, P4), at least one of the transmission devices (150, 152) used for obtaining the plant parameters, in particular, being placed on a surface of a component of the process plant and/or being non-invasive transmission devices (150, 152).

7. The method of claim 6, at least part of the transmission devices used for obtaining the plant parameters being wireless transmission devices.

8. The method of claim 6 or 7, the plant parameters being selected from: a metal wall temperature, inner pressure, pressure increase, density change, wall thickness loss, level changes, pump or compressor speed, flow, and vibration level.

9. The method of any one of claims 6 to 8, the transmission devices (150, 152) used for obtaining the plant parameters (p3, P4) being selected from: a temperature sensor, a strain gauge, an ultrasonic device, and a vibration measurement device.

10. The method of any one of the preceding claims, the process parameters (P1, P2) being selected from: process medium pressure, process medium temperature, process medium flow, and composition of process media.

11. The method of any one of the preceding claims, wherein the action (A) comprises at least one of: providing information about the deviation of the at least one value, and shutting down at least part of the plant (100), wherein shutting down at least part of the plant, in particular, comprises: bringing at least one safety means into safety position and/or stopping provision of electrical power to at least part of the plant.

12. The method of any one of the preceding claims, wherein the monitoring operation of the process plant (100) used as a layer of protection for the process plant (100) I addition to another layer of protection, the other layer of protection, preferably, being based on single failure mitigation.

13. A monitoring system (180) for monitoring operation of a process plant (100), the monitoring system (180) being configured to perform the steps of the method of any one of the preceding claims.

14. A process plant (100) comprising the monitoring system (180) of claim 13, the process plant (100), in particular, being selected from: an air separation plant, a natural gas plants, an ethylene plant, a hydrogen plant, and an adsorption plant.
